# EUROPEAN PATENT APPLICATION

(11) **EP 4 811 653 A1**
(43) Date of publication of application: **23.09.2026**
(21) Application number: 26161678.3
(22) Date of filing: 02.03.2026
(51) Int. Cl.: H02S 30/10, F24S 25/60

(54) **CAVITY-FREE FRAME AND PHOTOVOLTAIC MODULE**

(30) Priority: 12.03.2025 CN 202510292912
(71) Applicant: Tongwei Solar (Yancheng) Co., Ltd., Yancheng, Jiangsu 224063 (CN)
(72) Inventor: WANG, Xuekui, Yancheng, 224063 (CN); DING, Jiating, Yancheng, 224063 (CN); QI, Tianbao, Yancheng, 224063 (CN)
(74) Representative: Murgitroyd & Company

(57) **Abstract**

The present disclosure discloses a cavity-free frame and a photovoltaic module. The cavity-free frame includes a frame body, an abutting member, and a limiting member. The frame body includes a load-bearing portion, a support portion, a mounting portion, and a reinforcement portion. The load-bearing portion and the mounting portion are spaced apart, and the support portion being disposed between the load-bearing portion and the mounting portion and connected to the load-bearing portion and the mounting portion. The abutting member is connected to a first end of the load-bearing portion. The limiting member being connected to an end of the abutting member away from the load-bearing portion. The limiting member, the abutting member, and the bearing surface together enclose a mounting groove for installing a laminate member. An opening of the mounting groove facing a second end of the load-bearing portion. The present disclosure can reduce material costs.

## Description

### TECHNICAL FIELD

The present disclosure relates to the field of photovoltaic technology, and in particular, to a cavity-free frame and a photovoltaic module.

### BACKGROUND

In conventional technology, a frame of a photovoltaic module is designed with a clamping portion (generally referred to as an A-surface of the frame) for clamping an edge of a front panel of a laminate member. The A-surface of the frame primarily serves to prevent a photovoltaic laminate member from detaching, and its thickness is greater than that of a front glass. After prolonged outdoor use of the photovoltaic module, the A-surface of the frame may cause the front of the photovoltaic module to easily accumulate dust and rainwater, thereby affecting the normal power generation of the photovoltaic module. Furthermore, an aluminum frame of the conventional technology consists of two long frames and two short frames. Both the long frames and short frames have cavity structures. The long frames and short frames are connected by inserting corner brackets into their respective cavities. In other words, the frames used in the conventional technology require the corner brackets and need to be provided with the cavity structures, consuming more material and resulting in higher material costs, which is not conducive to cost reduction and efficiency improvement.

### SUMMARY

In view of above, it is necessary to provide a cavity-free frame. Cavity structures are eliminated in the cavity-free frame of the present disclosure. Meanwhile, connection between the cavity-free frames can be realized without corner brackets. Thus, material costs are significantly reduced while maintaining normal load-bearing capacity of the cavity-free frame, thereby realizing cost reduction and efficiency improvement.

An embodiment of the application provides a cavity-free frame.

The cavity-free frame includes a frame body, an abutting member, and a limiting member. The frame body includes a load-bearing portion, a support portion, a mounting portion, and a reinforcement portion. The load-bearing portion and the mounting portion are spaced apart, and the support portion being disposed between the load-bearing portion and the mounting portion and connected to the load-bearing portion and the mounting portion. A surface of the load-bearing portion away from the support portion forms a bearing surface. One end of the reinforcement portion is connected to the load-bearing portion and the other end is connected to the support portion. The abutting member is connected to a first end of the load-bearing portion. The limiting member being connected to an end of the abutting member away from the load-bearing portion. The limiting member, the abutting member, and the bearing surface together enclose a mounting groove for installing a laminate member. An opening of the mounting groove facing a second end of the load-bearing portion.

In some embodiments, a distance between a position where the reinforcement portion is connected to the load-bearing portion and a connection position between the load-bearing portion and the support portion is L1, a width of the load-bearing portion is D1, and L1 ≥ 1/4 D1.

In some embodiments, L1 ranges from 1/2 D1 to D1.

In some embodiments, a distance between a position where the reinforcement portion is connected on the support portion and a connection position between the load-bearing portion and the support portion is L2, a height of the support portion is D2, and L2 ≤ 2/3 D2.

In some embodiments, L2 ranges from 1/3 D2 to 2/3 D2.

In some embodiments, a connection between the support portion and the load-bearing portion having an arc transition.

In some embodiments, a connection between the support portion and the mounting portion having an arc transition.

In some embodiments, a fillet radius R1 of the arc transition at the connection between the support portion and the load-bearing portion ranging from 0.25 to 2.

In some embodiments, a fillet radius R2 of the arc transition at the connection between the support portion and the mounting portion ranging from 0.25 to .

In some embodiments, the frame body further includes a thickened portion. The thickened portion is connected to the support portion, and the thickened portion protrudes from a surface of the support portion for connection with the reinforcement portion.

In some embodiments, an end surface of the support portion is flush with an end surface of the first end of the load-bearing portion and an end surface of one end of the mounting portion; and the abutting member is flush with the support portion.

In some embodiments, the frame body further includes a connection mating portion. One end of the connection mating portion is connected to the support portion, and the other end of the connection mating portion extends away from the support portion along a plane where the support portion is located and is curled. The connection mating portion is used to achieve a snap-fit connection between adjacent frame bodies.

In some embodiments, a maximum distance H1 between a top surface of the limiting member and the bearing surface is not greater than a thickness H2 of the laminate member, and a minimum distance H3 between the limiting member and the bearing surface is not less than a thickness H4 of a back panel on the laminate member. The bearing surface is used to support a part of a back panel of the laminate member, and the abutting member is used to abut against an end surface of the back panel of the laminate member. An end surface of the limiting member is used to abut against an end surface of a front panel of the laminate member, and a surface of the limiting member acing the bearing surface is used to press against a part of the back panel of the laminate member.

In some embodiments, an outer surface of the limiting member is a sloped surface, and a height of the outer surface of the limiting member from the bearing surface gradually decreases from a side away from the abutting member to a side closer to the abutting member to form the sloped surface.

In some embodiments, a width W1 of the limiting member is equal to a distance W3 between an edge, closer to the abutting member, of a back panel of the laminate member and an edge, closer to the abutting member, of a front panel of the laminate member.

In some embodiments, the limiting member includes a limiting base connected to the abutting member and a limiting protrusion connected to the limiting base, and a minimum distance H5 between the limiting protrusion and the bearing surface is not less than the thickness H4 of the back panel of the laminate member.

In some embodiments, a surface of the abutting member within the mounting groove is provided with an abutting protrusion, and the abutting protrusion is close to the bearing surface and is configured to abut and secure at least part of an end face of a back panel of the laminate member; and/or the surface of the abutting member within the mounting groove is provided with an extrusion protrusion, and the extrusion protrusion is close to the limiting member and is configured to extrude adhesive overflow to a front panel of the laminate member.

In some embodiments, the bearing surface is provided with a plurality of glue overflow grooves to accommodate part of adhesive, and inner walls of the glue overflow groove narrows from a groove bottom surface of the glue overflow groove to an opening of the glue overflow groove.

An embodiment of the application further provides a photovoltaic module.

A photovoltaic module includes a laminate member and the cavity-free frame according to any of the above embodiments. The laminate member includes a back panel, a back encapsulant film, a cell, a front encapsulant film, and a front panel sequentially stacked, the laminate member being encapsulated by the cavity-free frame, and during encapsulation, edges of the laminate member being encapsulated within mounting grooves of a plurality of the cavity-free frames.

In some embodiments, edges of the back panel protrude beyond edges of the front panel. The laminate member is encapsulated by the cavity-free frame. A part of the back panel of the laminate member is located on the bearing surface. An end surface of the back panel of the laminate member abuts against the abutting member. An end surface of the front panel of the laminate member abuts against an end surface of the limiting member. A part of the back panel of the laminate member abuts against a surface of the limiting member facing the bearing surface.

The above-mentioned cavity-free frame can achieve a goal of significantly reducing material costs while maintaining the normal load-bearing capacity of the cavity-free frame, thereby realizing cost reduction and efficiency improvement. Specifically, in the application, the frame body is provided with a load-bearing portion, a support portion, a mounting portion, and a reinforcement portion. An edge of the laminate member is installed within the mounting groove formed by the limiting member, the abutting member, and the bearing surface. The support portion is disposed between the load-bearing portion and the mounting portion and is connected to the load-bearing portion and the mounting portion. Compared with conventional technology, the application eliminates the cavity structure. In the application, the support portion is directly used for connection between the load-bearing portion and the mounting portion, reducing one side of a traditional frame. The reinforcement portion, with one end connected to the load-bearing portion and the other end connected to the support portion, ensures load-bearing capacity. Since the cavity is eliminated in the application, there is no need for a corner bracket structure. Furthermore, the length of the mounting portion can be reduced and the height of the support portion can be lowered, significantly reducing material costs and achieving cost reduction and efficiency improvement. Moreover, since the cavity is eliminated, the application enables foldable connection between adjacent cavity-free frames. Several cavity-free frames can be connected in a movable form. After being folded together, the cavity-free frames can achieve a closed connection using a dedicated snap-fit connector.

Furthermore, the above cavity-free frame is configured as follows: the maximum distance H1 between the top surface of the limiting member and the bearing surface is not greater than the thickness H2 of the laminate member, and the minimum distance H3 between the limiting member and the bearing surface is not less than the thickness H4 of the back panel on the laminate member. In this case, the cavity-free frame can adapt to a laminate member where the width of the front panel is less than the width of the back panel. The abutting member abuts against the end surface of the back panel of the laminate member. The end surface of the limiting member abuts against the end surface of the front panel of the laminate member. The surface of the limiting member facing the bearing surface presses against a part of the back panel of the laminate member. This configuration ensures that after encapsulation, the front panel of the laminate member is higher than the limiting member. When the photovoltaic module is in use, the junction between the front panel and the limiting member is less prone to accumulating dust and rainwater. Even if a small amount of dust accumulates, it can be quickly and thoroughly cleaned from the front panel by rainwater scouring, without remaining on the front panel. This achieves the goals of reducing dust accumulation and reducing hot spots while also increasing the power generation of the photovoltaic module, to some extent reducing the frequency of module cleaning and ensuring.

### BRIEF DESCRIPTION OF THE DRAWINGS

To more clearly illustrate the technical solutions in the embodiments of the present disclosure, the following will briefly introduce accompanying drawings needed for describing the embodiments. Obviously, the accompanying drawings in the following description are only some embodiments of the present disclosure. For those skilled in the art, other drawings can be obtained based on these accompanying drawings without creative effort.

For a more complete understanding of the present disclosure and its beneficial effects, the following description will be made with reference to the accompanying drawings. In the following description, the same reference numeral indicates the same part.
FIG. 1 is a schematic diagram of a cavity-free frame according to an embodiment of the present disclosure.
FIG. 2 is a schematic structural diagram of a laminate member according to an embodiment of the present disclosure.
FIG. 3 is a schematic diagram of encapsulation of a cavity-free frame and a laminate member according to an embodiment of the present disclosure.
FIG. 4 is a schematic diagram of a cavity-free frame according to another embodiment of the present disclosure.
FIG. 5 is a schematic diagram of fitting between cavity-free frames according to another embodiment of the present disclosure.

### Reference Numerals

10, photovoltaic module; 100, cavity-free frame; 110, frame body; 111, load-bearing portion; 112, support portion; 113, mounting portion; 114, reinforcement portion; 115, thickened portion; 101, bearing surface; 102, glue overflow groove; 120, abutting member; 121, abutting protrusion; 122, extrusion protrusion; 130, limiting member; 131, limiting base; 140, mounting groove; 150, limiting protrusion; 151, connection portion; 152, bent portion; 153, auxiliary accommodation area; 160, connection mating portion; 170, clearance area; 180, pointed structure; 200, laminate member; 201, back panel; 202, back encapsulant film; 203, cell; 204, front encapsulant film; 205, front panel.

### DETAILED DESCRIPTION OF THE EMBODIMENTS

To make the above objects, features, and advantages of the present disclosure more apparent and easier to understand, the following describes the specific embodiments of the present disclosure in detail with reference to the drawings. In the following description, many specific details are set forth to facilitate a full understanding of the present disclosure. However, the present disclosure can be implemented in many other ways different from those described herein. Those skilled in the art can make similar improvements without departing from the spirit of the present disclosure. Therefore, the present disclosure is not limited by the specific embodiments disclosed below.

In the description of the present disclosure, it should be understood that terms such as "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential" indicate orientations or positional relationships based on the orientations or positional relationships shown in the accompanying drawings. They are only for the convenience of describing the present disclosure and simplifying the description, and do not indicate or imply that the referred device or element must have a specific orientation or be constructed and operated in a specific orientation. Therefore, they should not be construed as limiting the present disclosure.

In the present disclosure, unless otherwise explicitly specified and defined, terms such as "install", "connect", "link", "fix" should be interpreted broadly. For example, they may refer to fixed connections, detachable connections, or integrated connections; they may refer to mechanical connections or electrical connections; they may refer to direct connections or indirect connections through an intermediate medium; they may refer to internal communication between two elements or interaction between two elements. Unless otherwise explicitly defined, those skilled in the art can understand the specific meanings of the above terms in the present disclosure according to the specific context.

In the present disclosure, unless otherwise explicitly specified and defined, the first feature being "on" or "under" the second feature may mean that the first and second features are in direct contact, or that the first and second features are in indirect contact through an intermediate medium. Moreover, the first feature being "above", "over", or "on top of' the second feature may mean that the first feature is directly above or obliquely above the second feature, or merely indicates that a horizontal height of the first feature is higher than that of the second feature. The first feature being "below", "under", or "underneath" the second feature may mean that the first feature is directly below or obliquely below the second feature, or merely indicates that the horizontal height of the first feature is lower than that of the second feature.

In the description of the present disclosure, "several" means one or more, "multiple" means two or more. "Greater than", "less than", "exceeding", etc., are understood to exclude the number itself. "Above", "below", "within", etc., are understood to include the number itself. If terms like "first" and "second" are used, they are only for the purpose of distinguishing technical features and should not be understood as indicating or implying relative importance or implicitly indicating a quantity of the referred technical features or an order of the referred technical features.

Unless otherwise defined, all technical and scientific terms used herein have the same meaning as commonly understood by one of ordinary skill in the art to which this present disclosure belongs. The terms used in the specification of this present disclosure herein are for the purpose of describing specific embodiments only and are not intended to limit the present disclosure. The term "and/or" used herein includes any and all combinations of one or more of the associated listed items.

Herein, "optionally", "optional", and "option" refer to something that may or may not be present, i.e., selected from either of the two parallel schemes of "present" or "not present". If a technical solution contains multiple instances of "optional", unless otherwise specified, and there are no contradictions or mutual constraints, each "optional" is independent. In this disclosure, descriptions such as "optionally containing" or "optionally comprising" mean "containing or not containing".

In the present disclosure, "light-receiving surface or front surface" and "backlight surface or back surface" are used only to distinguish relative positional arrangement of two opposite surfaces of a cell substrate by name. In actual working conditions, the "light-receiving surface" is a surface of the cell substrate that primarily receives light, but the "backlight surface" does not necessarily not receive light. In fact, due to the presence of diffuse reflection light, etc., the "backlight surface" can also receive light irradiation in actual working conditions.

In the present disclosure, when referring to a numerical interval (i.e., a numerical range), unless otherwise specified, distribution of optional numerical values within this numerical interval is considered continuous, and includes two numerical endpoints of this numerical interval (i.e., the minimum and maximum values) and every numerical value between these two numerical endpoints. Unless otherwise specified, when a numerical interval refers only to integers within that numerical interval, it includes the two endpoint integers of that numerical range and every integer between the two endpoints, which is equivalent to directly listing every integer. When multiple numerical ranges are provided to describe a feature or characteristic, these numerical ranges can be combined. In other words, unless otherwise indicated, the numerical ranges disclosed in the present disclosure should be understood to include any and all sub-ranges incorporated therein. The "numerical value" in this numerical interval can be any quantitative value, such as a number, percentage, ratio, etc. "Numerical interval" is broadly allowed to include percentage intervals, ratio intervals, proportion intervals, and other quantitative intervals.

Embodiments of the present disclosure provide a cavity-free frame to solve at least one of the following technical problems existing in photovoltaic modules in conventional technology. (1) Photovoltaic modules may accumulate dust and rainwater after prolonged outdoor use, thereby affecting normal power generation of the photovoltaic module. (2) In traditional technology, an aluminum frame consists of two long frames, two short frames, and corner brackets, resulting in high material consumption for the frame, high material costs, which is not conducive to cost reduction and efficiency improvement. The cavity-free frame will be described below with reference to the accompanying drawings.

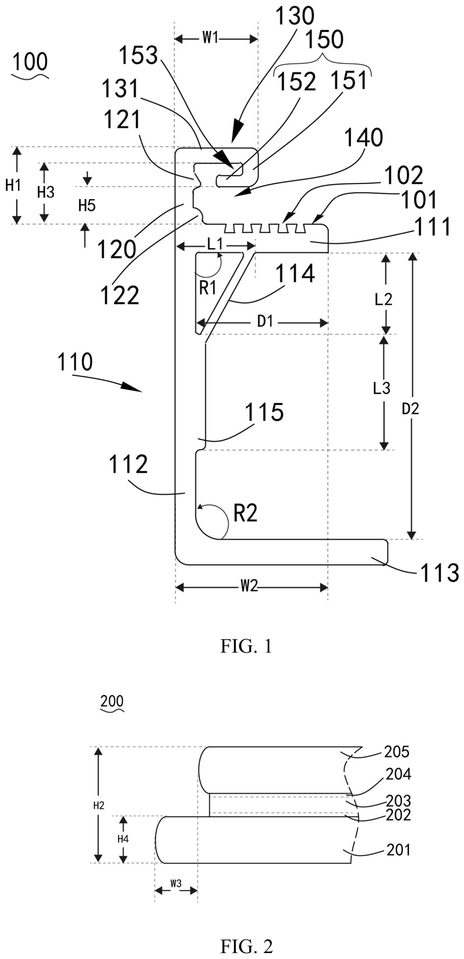

The cavity-free frame provided by the embodiments of the present disclosure, for example, can be referred to FIG. 1, which is a schematic structural diagram of the cavity-free frame provided by the embodiments of the present disclosure. The cavity-free frame of the present disclosure can be used for encapsulation of a laminate member to form a photovoltaic module.

To more clearly illustrate the structure of the cavity-free frame, the cavity-free frame will be described below with reference to the accompanying drawings.

Exemplarily, referring to FIG. 1, a cavity-free frame 100 includes a frame body 110, an abutting member 120, and a limiting member 130. The frame body 110 includes a load-bearing portion 111, a support portion 112, a mounting portion 113, and a reinforcement portion 114. The load-bearing portion 111 and the mounting portion 113 are spaced apart. The support portion 112 is disposed between the load-bearing portion 111 and the mounting portion 113 and is connected to the load-bearing portion 111 and the mounting portion 113. A surface of the load-bearing portion 111 away from the support portion 112 forms a bearing surface 101. One end of the reinforcement portion 114 is connected to the load-bearing portion 111 and the other end is connected to the support portion 112. The abutting member 120 is connected to a first end of the load-bearing portion 111. The limiting member 130 is connected to one end of the abutting member 120 away from the load-bearing portion 111. The limiting member 130, the abutting member 120, and the bearing surface 101 enclose a mounting groove 140 for mounting a laminate member 200. An opening of the mounting groove 140 faces a second end of the load-bearing portion 111.

The above-mentioned cavity-free frame 100 can achieve a purpose of significantly reducing material costs while maintaining the normal load of the cavity-free frame 100, thereby achieving cost reduction and efficiency improvement. Specifically, in the present disclosure, the frame body 110 is provided with the load-bearing portion 111, the support portion 112, the mounting portion 113, and the reinforcement portion 114. An edge of the laminate member 200 is installed within the mounting groove 140 formed by the limiting member 130, the abutting member 120, and the bearing surface 101. The support portion 112 is disposed between the load-bearing portion 111 and the mounting portion 113 and is connected to the load-bearing portion 111 and the mounting portion 113. Compared to traditional technology, the present disclosure eliminates the cavity structure. In the present disclosure, the support portion 112 is directly used to connect between the load-bearing portion 111 and the mounting portion 113, reducing one side in the traditional frame. The reinforcement portion 114 is connected at one end to the load-bearing portion 111 and at the other end to the support portion 112 to ensure the load-bearing capacity. Since the present disclosure eliminates the cavity, no corner bracket structure is required in the present disclosure. Meanwhile, a length of the mounting portion 113 and a height of the support portion 112 can be reduced, significantly reducing material costs and achieving cost reduction and efficiency improvement.

In the present disclosure, a triangular support is formed by the reinforcement portion 114 connected between the load-bearing portion 111 and the support portion 112, enhancing the support effect and improving the load of the load-bearing portion 111. Referring to FIG. 1, in the present disclosure, since the support portion 112 is used to support the load-bearing portion 111, correspondingly, the abutting member 120, and the support portion 112, an end face of the first end of the load-bearing portion 111, and an end face of one end of the mounting portion 113, can be aligned in a vertical direction. Optionally, the length of the mounting portion 113 is slightly greater than a length of the load-bearing portion 111.

When encapsulating the laminate member 200 with the cavity-free frame 100 of the present disclosure, multiple cavity-free frames 100 are used. Adjacent cavity-free frames 100 can be connected in a hinged form. When the adjacent cavity-free frames 100 are connected in the hinged form, the adjacent cavity-free frames 100 can be folded and gathered, and a snap-fit connection is used between the last two cavity-free frames 100 for sealing, forming a closed-loop structure.

In some embodiments, the frame body 110, the abutting member 120, and the limiting member 130 are connected as an integrated structure.

In some embodiments, the support portion 112 is overall a plate-like structure, and the support portion 112 is provided with no cavity structure.

In some embodiments, a distance between a position where the reinforcement portion 114 is connected to the load-bearing portion 111 and a connection position between the load-bearing portion 111 and the support portion 112 is L1, and a width of the load-bearing portion 111 is D1, where L1≥ 1/4 D1. It should be noted that the width D1 of the load-bearing portion 111 refers to a distance along a direction from the edge position of the laminate member 200 to a central position of the laminate member 200 after the cavity-free frame 100 is fitted with the laminate member 200.

In some embodiments, L1 ranges from 1/2 D1 to D1. By limiting the position where the reinforcement portion 114 is connected to the load-bearing portion 111 according to the above limitation, effective support of the load-bearing portion 111 by the reinforcement portion 114 may be ensured.

In some embodiments, a distance between a position where the reinforcement portion 114 is connected to the support portion 112 and the connection position between the load-bearing portion 111 and the support portion 112 is L2. A height of the support portion 112 is D2. L2 ≤ 2/3 D2. The height of the support portion 112 is a distance between the load-bearing portion 111 and the mounting portion 113.

In some embodiments, L2 ranges from 1/3 D2 to 2/3 D2. By limiting the position where the reinforcement portion 114 is connected on the support portion 112 according to the above limitation, it can be ensured that the reinforcement portion 114 has an effective force application point on the support portion 112, improving the support strength of the reinforcement portion 114 for the load-bearing portion 111.

In some embodiments, a connection between the support portion 112 and the load-bearing portion 111 has an arc transition.

In some embodiments, a connection between the support portion 112 and the mounting portion 113 has in an arc transition.

In some embodiments, a fillet radius R1 of the arc transition at the connection between the support portion 112 and the load-bearing portion 111 ranges from 0.25 to 2 to increase the load of the load-bearing portion 111.

In some embodiments, a fillet radius R2 of the arc transition at the connection between the support portion 112 and the mounting portion 113 ranges from 0.25 to 2 to improve stability of the support portion 112 and increase the load on the load-bearing portion 111.

In some embodiments, the frame body 110 may further include a thickened portion 115. The thickened portion 115 is connected to the support portion 112, and the thickened portion 115 protrudes from a surface of the support portion 112 for providing a surface for connection of the reinforcement portion 114. The thickened portion 115 can improve support strength of the support portion 112 and increase the load of the entire cavity-free frame 100.

In some embodiments, a length of the thickened portion 115 on the support portion 112 is L3. Correspondingly, the length L3 of the thickened portion 115 ranges from 1/3D2 to 1/2D2, where D2 is the height of the support portion 112.

Optionally, referring to FIG. 1, the thickened portion 115 is located at the middle position of the support portion 112 in the height direction of the support portion 112.

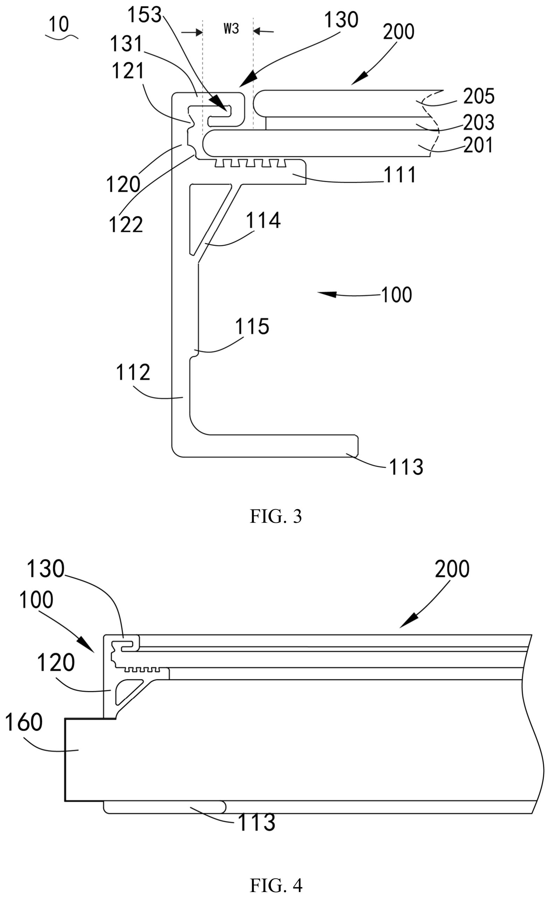

In some embodiments, referring to FIGS 1 and 3, the connection position of one end of the reinforcement portion 114 is arranged at the center position of the load-bearing portion 111 and can be fine-tuned according to actual conditions. The connection position of the other end of the reinforcement portion 114 is arranged at the thickened portion 115 of the support portion 112. Optionally, the connection position of the other end of the reinforcement portion 114 on the thickened portion 115 can be arbitrarily arranged. As long as the connection position of the other end of the reinforcement portion 114 is arranged on the thickened portion 115, the load-bearing portion 111 can be effectively supported.

In some embodiments, the support portion 112 is flush with the end face of the first end of the load-bearing portion 111 and an end face of one end of the mounting portion 113. Specifically, the support portion 112 is flush with the end face of the first end of the load-bearing portion 111 and the end face of a third end of the mounting portion 113. Optionally, the abutting member 120 is flush with the support portion 112. Referring to the view shown in FIG. 1, the left side of the load-bearing portion 111 is the first end, and the right side is the second end. The left side of the mounting portion 113 is the third end, and the right side is a fourth end.

The present disclosure eliminates the cavity, thus enabling foldable connection between adjacent cavity-free frames 100. Multiple cavity-free frames 100 are connected in a movable connection form, such as hinge connection, so that adjacent cavity-free frames 100 can be folded. A closed connection between the multiple cavity-free frames 100 can be realized by using a dedicated snap-fit after being folded together to achieve encapsulation of the laminate member 200.

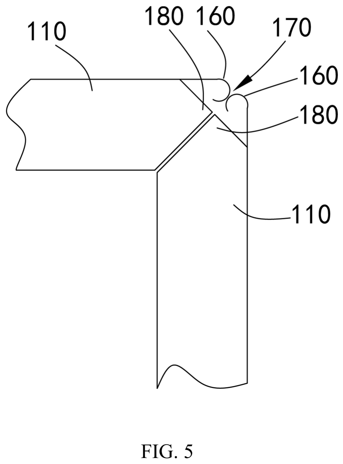

In some embodiments, referring to FIG. 4, FIG. 4 is a schematic diagram of a cavity-free frame 100 according to another embodiment of this present disclosure, the frame body 110 further includes a connection mating portion 160. One end of the connection mating portion 160 is connected to the support portion 112, and the other end of the connection mating portion 160 extends away from the support portion 112 along a plane where the support portion 112 is located, and this end is curled. The connection mating portion 160 is used to achieve a snap-fit connection between adjacent frame bodies 110 and a connection snap-fit. Referring to FIG. 5, which is a schematic diagram of fitting between cavity-free frames 100 according to another embodiment of the present present disclosure, after adjacent cavity-free frames 100 are aligned, adjacent connection mating portions 160 come close. Since the outward-facing end of the connection mating portion 160 is curled, there is a certain recessed clearance area 170 between adjacent connection mating portions 160. This clearance area 170 is used for the insertion of a snap-fit to achieve the snap connection of two adjacent connection mating portions 160.

In some embodiments, when the connection mating portion 160 is provided, the following adaptive structural adjustments can be made. Referring to FIG. 5, along a length direction of the frame body 110, two end faces of the load-bearing portion 111 and the front and rear end faces of the support portion 112 are cut, so that the two end faces of the load-bearing portion 111 and the two end faces of the support portion 112 respectively form a pointed structure 180, and edges of the pointed structure 180 have a 90° included angle. The length direction of the frame body 110 refers to a direction parallel to a corresponding edge of the laminate member 200 after the frame body 110 is encapsulated with the laminate member 200.

During cutting, the two end faces of the load-bearing portion 111 and the two end faces of the support portion 112 are cut. After cutting, a pointed structure 180 with a 90° bent structure is formed. After the pointed structures 180 of adjacent cavity-free frames 100 are assembled together, two edges, faced with each other, of the two pointed structures 180 fit together, and the outward-facing edges of the two pointed structures 180 are flush with each other. This arrangement can provide a curling space for the connection mating portion 160. Lengths of the two edges of the pointed structure 180 can be set based on a width of the frame body 110 correspondingly, in order to achieve alignment of the adjacent frame bodies 110 during assembling.

In some embodiments, a length of the connection mating portion 160 satisfies the following condition. After alignment of adjacent cavity-free frames 100, there is a certain gap between adjacent connection mating portions 160, and this gap is used for part of the snap-fit to snap into.

In some embodiments, the connection mating portion 160 can be prepared simultaneously during the processing and cutting of the end of the cavity-free frame 100. During cutting, part of the cavity-free frame 100 is retained to form the aforementioned connection mating portion 160.

In some embodiments, a maximum distance H1 between a top surface of the limiting member 130 and the bearing surface 101 is not greater than a thickness H2 of the laminate member 200. A width W1 of the limiting member 130 is less than a width W2 of the bearing surface 101. A minimum distance H3 between the limiting member 130 and the bearing surface 101 is not less than a thickness H4 of a back panel 201 of the laminate member 200. The bearing surface 101 is used to support part of the back panel 201 of the laminate member 200. The abutting member 120 is used to abut against an end face of the back panel 201 of the laminate member 200. An end face of the limiting member 130 is used to abut against an end face of the front panel 205 of the laminate member 200. The surface of the limiting member 130 facing the bearing surface 101 is used to press against part of the back panel 201 of the laminate member 200.

The above cavity-free frame 100 is set as follows. The maximum distance H1 between the top surface of the limiting member 130 and the bearing surface 101 is not greater than the thickness H2 of the laminate member 200. The width W1 of the limiting member 130 is less than the width W2 of the bearing surface 101. The minimum distance H3 between the limiting member 130 and the bearing surface 101 is not less than the thickness H4 of the back panel 201 of the laminate member 200. Thus, the cavity-free frame 100 can be adapted to a laminate member 200 with a width of the front panel 205 less than a width of the back panel 201. Referring to the laminate member 200 shown in FIG. 2, the abutting member 120 abuts against the end face of the back panel 201 of the laminate member 200. The end face of the limiting member 130 abuts against the end face of the front panel 205 of the laminate member 200. The surface of the limiting member 130 facing the bearing surface 101 presses against part of the back panel 201 of the laminate member 200. This arrangement can achieve that after encapsulation, the front panel 205 of the laminate member 200 is higher than the limiting member 130. When the photovoltaic module 10 is in use, the junction between the front panel 205 and the limiting member 130 is not prone to accumulating dust and rainwater. Even if there is a small amount of dust accumulation, it can be quickly and thoroughly cleaned from the front panel 205 under rainwater scouring, without remaining on the front panel 205. This achieves a purpose of reducing dust accumulation and reducing hot spots while increasing power generation of the photovoltaic module 10, which to some extent, reduces frequency of module cleaning and ensures profitability.

In some embodiments, the limiting member 130 is parallel to the bearing surface 101. Optionally, an outer surface of the limiting member 130 is a smooth surface or a sloped surface. When the outer surface of the limiting member 130 is a sloped surface, a height of the outer surface of the limiting member 130 from the bearing surface 101 gradually decreases from a side away from the abutting member 120 to a side closer to the abutting member 120, forming a sloped surface. This can achieve that a small amount of dust accumulation on the front panel 205 can flow away with the scouring of rainwater, achieving a purpose of preventing dust accumulation.

In some embodiments, the maximum distance H1 between the top surface of the limiting member 130 and the bearing surface 101 is less than the thickness H2 of the laminate member 200, and a distance between the end of the limiting member 130 away from the abutting member 120 and the bearing surface 101 is greater than a distance between the end of the limiting member 130 closer to the abutting member 120 and the bearing surface 101. It should be noted that, referring to FIG. 1, the maximum distance H1 between the top surface of the limiting member 130 and the bearing surface 101 refers to a maximum distance between the outer surface of the limiting member 130 and the bearing surface 101.

In some embodiments, the maximum distance H1 between the top surface of the limiting member 130 and the bearing surface 101 is smaller than the thickness H2 of the laminate member 200 by 0 to 3mm. Through such configuration, a height of the limiting member 130 is slightly smaller than or flush with a height of the laminate member 200, which can achieve that a small amount of dust accumulation on the front panel 205 can flow away with the scouring of rainwater, achieving the purpose of preventing dust accumulation.

In some embodiments, the limiting member 130 includes a limiting base 131 connected to the abutting member 120 and a limiting protrusion 150 connected to the limiting base 131. The minimum distance H5 between the limiting protrusion 150 and the bearing surface 101 is not less than the thickness H4 of the back panel 201 of the laminate member 200. Meanwhile, a minimum distance H3 between the limiting member 130 and the bearing surface 101 is greater than a minimum distance H5 between the limiting protrusion 150 and the bearing surface 101. When the limiting member 130 is provided with the limiting protrusion 150, the limiting protrusion 150 is used to press against part of the back panel 201 of the laminate member 200. When the limiting member 130 has the limiting base 131, the limiting base 131 is parallel to the bearing surface 101.

In some embodiments, the minimum distance H5 between the limiting protrusion 150 and the bearing surface 101 is greater than the thickness H4 of the back panel 201 of the laminate member 200 by 0.6 mm to 1.5 mm. Such configuration provides a certain clearance the back panel 201 of the laminate member 200 to move within an area between the limiting protrusion 150 and the bearing surface 101, ensuring that the back panel 201 can have some degree of movement during encapsulation.

In some embodiments, the width W1 of the limiting member 130 ranges from 2mm to 7mm. The value of the width W1 of the limiting member 130 includes but is not limited to: 2mm, 3mm, 4mm, 5mm, 6mm, 7mm, or any range between the aforementioned values.

In some embodiments, the width W1 of the limiting member 130 is equal to a distance W3 between an edge of the back panel 201 and an edge of the front panel 205 on the laminate member 200. As shown in FIG. 2, the edge of the back panel 201 on the laminate member 200 protrudes beyond the edge of the front panel 205. The distance by which the edge of the back panel 201 protrudes beyond the edge of the front panel 205 is W3. With the above configuration, after encapsulation, the edge of the laminate member 200 can be completely clamped within the frame, achieving a state where the abutting member 120 abuts the end face of the back panel 201 of the laminate member 200, and the limiting member 130 abuts the end face of the front panel 205 of the laminate member 200. During encapsulation, this can minimize the risk of breakage of the front panel 205.

It should be noted that if the limiting member 130 includes the limiting protrusion 150, the width W1 of the limiting member 130 refers to a width of the limiting base 131. The width W1 of the limiting base 131 is a dimension, along a width direction of the cavity-free frame, of the limiting base 131.

In some embodiments, the width W1 of the limiting member 130 is less than the width W2 of the bearing surface 101. By setting the width of the limiting member 130 to be less than the width of the bearing surface 101, encapsulation of the laminate member 200 with different widths for the front panel 205 and the back panel 201 is achieved.

In some embodiments, the limiting protrusion 150 is located at one end of the limiting member 130 away from the abutting member 120. Positioning the limiting protrusion 150 at the end away from the abutting member 120 allows it to press against an extending portion of the back panel 201 on one hand, and abut an end face of the front panel 205 on the other hand, improving encapsulation adhesion, reducing gaps between the frame and the laminate member 200, and thereby minimizing dust accumulation.

In some embodiments, the limiting protrusion 150 includes a connection portion 151 and a bent portion 152. The connection portion 151 and the bent portion 152 together form a bent structure. For example, as shown in FIG. 1, the bent structure is approximately "J"-shaped. The connection portion 151 is connected to the limiting base 131. The bent portion 152 is connected to the connection portion 151 and extends toward a groove bottom surface of the mounting groove 140. An auxiliary accommodation area 153 is formed by the bent portion 152, the connection portion 151, and the limiting base 131 to accommodate overflow adhesive. The connection portion 151 and part of the limiting base 131 together abut the end face of the front panel 205 of the laminate member 200, while the bent portion 152 presses against part of the front panel 205 of the laminate member 200. The bent portion 152 can limit the front panel 205, and an outer surface of the bent portion 152 away from the abutting member 120 is configured to abut the end face of the front panel 205, thereby minimizing the risk of breakage of the front panel 205 during encapsulation.

In some embodiments, a length by which the bent portion 152 extends toward the groove bottom surface of the mounting groove 140 is not greater than the distance W3 between the edge of the back panel 201 of the laminate member 200 and the edge of the front panel 205 of the laminate member 200.

In some embodiments, an extension direction of the bent portion 152 and the limiting base 131 are both parallel to the bearing surface 101. As shown in FIG. 1, the surface of the bent portion 152 close to the bearing surface 101 is preferably designed as a plane. This allows the bent portion 152 to have a larger contact area with the back panel 201, helping to distribute forces during mechanical load testing.

In some embodiments, an outer surface at the connection between the connection portion 151 and the bent portion 152 has a curved fillet structure. This design facilitates the insertion of the back panel 201 into the mounting groove 140, improving installation convenience.

In some embodiments, an included angle between the connection portion 151 and the limiting base 131 ranges from 80° to 110°.

Preferably, the connection portion 151 is perpendicular to the limiting base 131, so that a contact area between the connection portion 151 and the end face of the front panel 205 is increased, thereby reducing gaps between them, and minimizing dust accumulation.

In some embodiments, a surface of the abutting member 120 within the mounting groove 140 is provided with an abutting protrusion 121. The abutting protrusion 121 is close to the bearing surface 101 and is used to abut and secure at least part of the end face of the back panel 201 of the laminate member 200.

In some embodiments, the surface of the abutting member 120 within the mounting groove 140 is provided with an extrusion protrusion 122. The extrusion protrusion 122 is close to the limiting member 130 and is used to assist adhesive in flowing to the front panel 205 of the laminate member 200.

In some embodiments, the bearing surface 101 is provided with a plurality of glue overflow grooves 102. The glue overflow grooves 102 can accommodate part of the adhesive, thereby enhancing its adhesive strength and improving firmness of the connection between the back panel 201 and the bearing surface 101.

In some embodiments, the surface of the bearing surface 101 is generally planar, so that a contact area between the back panel 201 and the bearing surface 101 is increased, thereby improving the firmness of their connection.

In some embodiments, inner walls of the glue overflow groove 102 gradually narrows from a groove bottom surface of the glue overflow groove 102 to an opening of the glue overflow groove 102, allowing cured adhesive to form a structure that is larger inside and smaller outside, so that it less likely for the adhesive to detach from the glue overflow groove 102, thereby improving the firmness of the connection between the back panel 201 and the bearing surface 101.

In some embodiments, the shape of the opening of the glue overflow groove 102 may be regular or irregular, such as a square opening, a circular opening, etc., without specific limitation.

In some embodiments, a quantity of openings of the glue overflow grooves 102 is determined by the width W2 of the bearing surface 101.

In some embodiments, the frame body 110 is a metal frame made of metal or alloy materials, or a composite material frame made of composite materials.

Preferably, the frame body 110 is a composite material frame made of composite materials. The materials for the composite material frame include polyurethane, glass fiber, etc. These materials are insulating, so a creepage distance of the photovoltaic module 10 using the composite material frame can theoretically be zero. In order to prevent the battery cell 203 from being obstructed and to ensure the sealing integrity of the adhesive film, the photovoltaic module 10 of the present disclosure adopts the frame made of composite material, allowing the size of the front panel 205 to be reduced compared to conventional photovoltaic modules 10. Thus, an overall structural size can be effectively reduced. The creepage distance refers to a safe distance between the frame and live parts such as the cell string.

An embodiment of the present disclosure further provides a photovoltaic module 10.

The photovoltaic module 10 includes a laminate member 200 and the cavity-free frame 100 according to any of the above embodiments. As shown in FIG. 2, FIG. 2 is a schematic diagram of a laminate member 200 according to an embodiment of this present disclosure, the laminate member 200 includes a back panel 201, a back encapsulant film 202, a cell 203, a front encapsulant film 204, and a front panel 205 stacked in sequence. The laminate member 200 is encapsulated by the cavity-free frame 100. During encapsulation, an edge of the laminate member 200 is encapsulated within a mounting groove 140 of the cavity-free frame 100.

In some embodiments, referring to the laminate member 200 shown in FIG. 2,edges of the back panel 201 protrude beyond edges of the front panel 205. A distance between the edge of the back panel 201 of the laminate member 200 and the edge of the front panel 205 of the laminate member 200 is W3. As shown in FIG. 3, FIG. 3 is a schematic diagram of encapsulation of the cavity-free frame 100 and the laminate member 200 according to an embodiment of this present disclosure. The laminate member 200 is encapsulated by the cavity-free frame 100. Part of the back panel 201 of the laminate member 200 is located on the bearing surface 101. An end face of the back panel 201 of the laminate member 200 abuts an abutting member 120. An end face of the front panel 205 of the laminate member 200 abuts an end face of the limiting member 130. Part of the back panel 201 of the laminate member 200 abuts a surface of the limiting member 130 facing the bearing surface 101.

In some embodiments, if the limiting member 130 includes a limiting protrusion 150, the limiting protrusion 150 engages with the back panel 201 by pressing, specifically, the bent portion 152 engages in a pressing fit with the back panel 201. The connecting portion 151, together with part of the limiting base 131, is configured to abut against the end face of the front panel 205 of the laminate 200, while the bent portion 152 is configured to press against a portion of the back panel 201 of the laminate 200. The bent portion 152 can limit the position of the back panel 201. An outer surface of the bent portion 152, which faces away from the abutting member 120, can be used to abut against the end face of the front panel 205, thereby minimizing the risk of breakage of the front panel 205 during encapsulation.

In some embodiments, a quantity of the cavity-free frame 100 is greater than one. When there are a plurality of cavity-free frames 100, end faces of adjacent cavity-free frames 100 can be abut together through beveled planes to achieve a 90° angle splicing between adjacent cavity-free frames 100. During processing, the end faces of the cavity-free frames 100 can be cut to form 45° beveled surfaces, facilitating splicing.

In some embodiments, the lengths of the cavity-free frames 100 can be equal or unequal. For example, the cavity-free frames 100 include long frames and short frames to respectively adapt to the long and short sides of the laminate member 200.

In some embodiments, the length of the cavity-free frame 100 can be set according to the length or width of the laminate member 200, without specific limitation.

In some embodiments, during encapsulation, the adhesive used in the mounting groove 140 can be glue commonly used in the photovoltaic field, without specific limitation.

In some embodiments, the aforementioned front panel 205 and back panel 201 can each independently be selected from photovoltaic glass panels.

In view of above, compared to conventional technology, the cavity-free frame 100 of the present disclosure has the following beneficial effects.
(1) Cost reduction: the present disclosure eliminates the cavity structure, so that there is no need for corner brackets. Additionally, the material required for the frame body 110 is reduced by removing one border, and the dimensions of other borders such as the support portion 112 and the mounting portion 113 can be reduced, thereby effectively reducing an amount of material used for non-critical portions while optimizing the structure to ensure load-bearing capacity, and finally achieving cost reduction for the frame material.
(2) Onboard reliability: the limiting member 130 or the limiting protrusion 150 is used to limit the back panel 201 of the laminate member 200, thereby maximizing onboard load strength.
(3) Dust prevention: Based on the safety and reliability of the onboard load, a maximum height of the limiting member 130 from the bearing surface 101 is not higher than the front panel 205. Therefore, a small amount of dust on the front panel 205 can be washed away more easily by rainwater, achieving the purpose of dust prevention.
(4) Aesthetic appearance: the present disclosure preferably uses a composite material frame made of composite materials, which can be produced in various colors such as black and dark blue, achieving the same color effect as the cell 203 and providing better visual effects. Since the dimensions of the limiting member 130 and the abutting member 120 are reduced in the present disclosure, even if a metal frame made of metal or alloy materials, such as an aluminum frame, is used, visual comfort can be improved.
(5) Diverse assembly forms for the cavity-free frame 100: the present disclosure eliminates the cavity of the frame, enabling that long and short frames can be connected using an integrated folding method, and a snap-fit connection can be used at the first and last cavity-free frames 100 to achieve a closed structure.

In the above embodiments, the descriptions of each embodiment have their own emphases. For parts not described in detail in a certain embodiment, reference can be made to the relevant descriptions in other embodiments.

The technical features of the above embodiments can be combined arbitrarily. For brevity, not all possible combinations of the technical features in the above embodiments are described. However, as long as there is no contradiction in the combination of these technical features, they should be considered within the scope of this specification.

The above embodiments only express several implementations of the present disclosure. Their descriptions are specific and detailed but should not be construed as limiting the scope of the patent. It should be noted that those skilled in the art can make several modifications and improvements without departing from the concept of the present disclosure, and these all fall within the protection scope of the present disclosure. Therefore, the protection scope of the present disclosure patent should be based on the appended claims.

## Claims

1. A cavity-free frame (100), comprising a frame body (110), an abutting member (120), and a limiting member (130), the frame body (110) comprising a load-bearing portion (111), a support portion (112), a mounting portion (113), and a reinforcement portion (114), the load-bearing portion (111) and the mounting portion (113) being spaced apart, the support portion (112) being disposed between the load-bearing portion (111) and the mounting portion (113) and connected to the load-bearing portion (111) and the mounting portion (113), a surface of the load-bearing portion (111) away from the support portion (112) forming a bearing surface (101), one end of the reinforcement portion (114) being connected to the load-bearing portion (111) and the other end being connected to the support portion (112), the abutting member (120) being connected to a first end of the load-bearing portion (111), the limiting member (130) being connected to an end of the abutting member (120) away from the load-bearing portion (111), the limiting member (130), the abutting member (120), and the bearing surface (101) together enclosing a mounting groove (140) for installing a laminate member (200), and an opening of the mounting groove (140) facing a second end of the load-bearing portion (111).

2. The cavity-free frame (100) according to claim 1, wherein a distance between a position where the reinforcement portion (114) is connected to the load-bearing portion (111) and a connection position between the load-bearing portion (111) and the support portion (112) is L1, a width of the load-bearing portion (111) is D1, and L1 ≥ 1/4 D1.

3. The cavity-free frame (100) according to claim 2, wherein L1 ranges from 1/2 D1 to D1.

4. The cavity-free frame (100) according to claim 1, wherein a distance between a position where the reinforcement portion (114) is connected on the support portion (112) and a connection position between the load-bearing portion (111) and the support portion (112) is L2, a height of the support portion (112) is D2, and L2 ≤ 2/3 D2.

5. The cavity-free frame (100) according to claim 4, wherein L2 ranges from 1/3 D2 to 2/3 D2.

6. The cavity-free frame (100) according to any one of claims 1 to 5, wherein the cavity-free frame (100) further satisfies at least one of the following conditions:
a connection between the support portion (112) and the load-bearing portion (111) having an arc transition; and
a connection between the support portion (112) and the mounting portion (113) having an arc transition.

7. The cavity-free frame (100) according to claim 6, wherein the cavity-free frame (100) further satisfies at least one of the following conditions:
a fillet radius R1 of the arc transition at the connection between the support portion (112) and the load-bearing portion (111) ranging from 0.25 to 2; and
a fillet radius R2 of the arc transition at the connection between the support portion (112) and the mounting portion (113) ranging from 0.25 to 2.

8. The cavity-free frame (100) according to any one of claims 1 to 7, wherein the cavity-free frame (100) further satisfies at least one of the following conditions:
the frame body (110) further comprising a thickened portion (115), the thickened portion (115) being connected to the support portion (112), and the thickened portion (115) protruding from a surface of the support portion (112) for connection with the reinforcement portion (114);
an end surface of the support portion (112) being flush with an end surface of the first end of the load-bearing portion (111) and an end surface of one end of the mounting portion (113), and the abutting member (120) being flush with the support portion (112); and
the frame body (110) further comprising a connection mating portion (160), one end of the connection mating portion (160) being connected to the support portion (112), the other end of the connection mating portion (160) extending away from the support portion (112) along a plane where the support portion (112) is located and curled, and the connection mating portion (160) being used to achieve a snap-fit connection between adjacent frame bodies (110).

9. The cavity-free frame (100) according to any one of claims 1 to 7, wherein a maximum distance H1 between a top surface of the limiting member (130) and the bearing surface (101) is not greater than a thickness H2 of the laminate member (200), a minimum distance H3 between the limiting member (130) and the bearing surface (101) is not less than a thickness H4 of a back panel (201) on the laminate member (200), the bearing surface (101) is used to support a part of the back panel (201) of the laminate member (200), the abutting member (120) is used to abut against an end surface of the back panel (201) of the laminate member (200), an end surface of the limiting member (130) is used to abut against an end surface of a front panel (205) of the laminate member (200), and a surface of the limiting member (130) facing the bearing surface (101) is used to press against a part of the back panel (201) of the laminate member (200).

10. The cavity-free frame (100) according to any one of claims 1 to 9, wherein an outer surface of the limiting member (130) is a sloped surface, and a height of the outer surface of the limiting member (130) from the bearing surface (102) gradually decreases from a side away from the abutting member (120) to a side closer to the abutting member (120) to form the sloped surface.

11. The cavity-free frame (100) according to any one of claims 1 to 10, wherein a width W1 of the limiting member (130) is equal to a distance W3 between an edge, closer to the abutting member (120), of a back panel (201) of the laminate member (200) and an edge, closer to the abutting member (120), of a front panel (205) of the laminate member (200).

12. The cavity-free frame (100) according to claim 9, wherein the limiting member (130) comprises a limiting base (131) connected to the abutting member (120) and a limiting protrusion (150) connected to the limiting base (131), and a minimum distance H5 between the limiting protrusion (150) and the bearing surface (101) is not less than the thickness H4 of the back panel (201) of the laminate member (200).

13. The cavity-free frame (100) according to any one of claims 1 to 12, wherein a surface of the abutting member (120) within the mounting groove (140) is provided with an abutting protrusion (121), and the abutting protrusion (121) is close to the bearing surface (101) and is configured to abut and secure at least part of an end face of a back panel (201) of the laminate member (200); and/or
the surface of the abutting member (120) within the mounting groove (140) is provided with an extrusion protrusion (122), and the extrusion protrusion (122) is close to the limiting member and is configured to extrude adhesive overflow to a front panel (205) of the laminate member (200).

14. The cavity-free frame (100) according to any one of claims 1 to 13, wherein the bearing surface (101) is provided with a plurality of glue overflow grooves (102) to accommodate part of adhesive, and inner walls of the glue overflow groove (102) narrows from a groove bottom surface of the glue overflow groove (102) to an opening of the glue overflow groove (102).

15. A photovoltaic module (10), comprising a laminate member (200) and the cavity-free frame (100) according to any one of claims 1 to 14, the laminate member (200) comprising a back panel (201), a back encapsulant film (202), a cell (203), a front encapsulant film (204), and a front panel (205) sequentially stacked, the laminate member (200) being encapsulated by the cavity-free frame (100), and during encapsulation, edges of the laminate member (200) being encapsulated within mounting grooves (140) of a plurality of the cavity-free frames (100).
